# EUROPEAN PATENT APPLICATION

(11) **EP 3 251 510 A1**
(43) Date of publication of application: **06.12.2017**
(21) Application number: 16172556.9
(22) Date of filing: 02.06.2016
(51) Int. Cl.: A01N 43/653, A01N 25/34, B27K 3/38, C08L 97/02, A01P 3/00

(54) **PROTECTING PLYWOOD COMPRISING A NUMBER OF VENEERS AGAINST THE DETRIMENTAL EFFECT OF MICRO-ORGANISMS**

(71) Applicant: UPM-Kymmene Wood Oy, 15140 Lahti (FI)
(72) Inventor: Koski, Anna, 15610 Lahti (FI)
(74) Representative: Papula Oy

(57) **Abstract**

The invention relates to a method for protecting plywood comprising a number of veneers against the detrimental effect of micro-organisms, wherein the method comprises: a) providing a number of veneers, wherein each of the veneers has two sides and a thickness of 0.5 - 4.0 mm; b) treating the number of veneers by applying an aqueous composition comprising biocide, especially propiconazole, on at least one side of each of the veneers, wherein the amount and concentration of the aqueous composition comprising biocide, applied on the veneer, is chosen such that the average moisture content of the treated veneer is at most 10 weight-% when the target retention level for the biocide is 500 - 2000 g/m³; and c) gluing together the treated veneers with a binder composition to produce plywood. The invention further relates to plywood and to the use thereof as well as to the use of an aqueous composition comprising biocide.

## Description

### FIELD OF THE INVENTION

The invention relates to a method for protecting plywood comprising a number of veneers against the detrimental effect of micro-organism. The invention further relates to plywood comprising a number of veneers and being protected against the detrimental effect of micro-organism. The invention further relates to the use of plywood. The invention further relates to the use of an aqueous composition comprising biocide.

### BACKGROUND OF THE INVENTION

Plywood is a material often used in applications that require resistance to e.g. cracking, breaking, shrinkage, twisting and/or warping. High strength, light-weight, dimensional stability and resistance against mechanical, chemical and/or biological degradation are desirable properties for plywood. In end-use applications of plywood like scaffoldings and vehicle floorings (buses, minibuses, trains, coaches, trams, caravans, trailers etc.), there is a need for plywood with increased biological durability. The moisture content of the plywood in these applications may be increased to levels where the risk of brown and white rot attack on the plywood exists.

Wood material can be treated with chemicals by e.g. vacuum pressure impregnation that is carried out in a pressure vessel. However, for plywood, this conventional method of applying preservative treatment is not appropriate due to the low penetration of the chemical through the glue-lines, the unsuitable geometry of the pressure vessels for plywood, and the batch type impregnation process. Also, an additional drying step is needed, which may adversely affect the strength of plywood.

The prior art further recognizes to treat plywood through the glue-lines, wherein the protecting chemical, such as biocide, is mixed with the binder composition used to glue together the veneers to form plywood. The glue-line impregnation method can be integrated into lay-up operations, but it requires the preservative chemical to be stable under extreme process conditions such as heat, pressure and high pH that occur during the lay-up and hot pressing steps of the plywood. These process conditions can result in degradation of the preservative and thus loss of its activity during the service life of the end product. In addition, the used preservative has to be able to penetrate from the binder composition into the wood material in order to provide the desired protection level.

The inventors have recognized the need for a method to protect plywood against the detrimental effect of micro-organisms while remaining the other properties of the plywood required for its end-use applications.

### PURPOSE OF THE INVENTION

The purpose of the invention is to provide a new type of method for protecting plywood comprising a number of veneers against the detrimental effect of micro-organisms. Further, the purpose of the invention is to provide a new type of plywood comprising a number of veneers and being protected against the detrimental effect of micro-organisms and to provide a new use of the plywood. Further, the purpose of the invention is to provide a new use of an aqueous composition comprising biocide.

### SUMMARY

The method according to the present invention is characterized by what is presented in claim 1.

The plywood according to the present invention is characterized by what is presented in claim 16 or claim 17.

The use of the plywood according to the present invention is characterized by what is presented in claim 19.

The use of the aqueous composition comprising biocide according to the present invention is characterized by what is presented in claim 20.

### DETAILED DESCRIPTION OF THE INVENTION

The present invention relates to a method for protecting plywood comprising a number of veneers against the detrimental effect of micro-organisms, wherein the method comprises:
a) providing a number of veneers, wherein each of the veneers has two sides and a thickness of 0.5 - 4.0 mm;
b) treating the number of veneers by applying an aqueous composition comprising biocide on at least one side of each of the veneers, wherein the amount and concentration of the aqueous composition comprising biocide, applied on the veneer, is chosen such that the average moisture content of the treated veneer is at most 10 weight-% when the target retention level for the biocide is 500 - 2000 g/m³; and
c) gluing together the treated veneers with a binder composition to produce plywood.

The present invention relates further to plywood obtainable by a method according to the present invention.

The present invention relates further to plywood comprising a number of veneers glued together with a binder composition and being protected against the detrimental effect of micro-organisms, wherein each of the veneers has two sides and a thickness of 0.5 - 4.0 mm, wherein each of the veneers are applied, on at least one side thereof, with an aqueous composition comprising biocide, wherein the biocide consists of propiconazole, and wherein the target retention level of the biocide is 500 - 2000 g/m³.

The present invention relates further to the use of plywood for the production of scaffold or vehicle flooring. These uses are so-called above ground applications. The treated plywood may be used in situations as defined in class 2 and 3 according to standard EN 335 (SFS-EN 335. Durability of wood and wood-based products. Use classes: definitions, application to solid woods and wood based panels. (2013)).

The present invention relates further to the use of an aqueous composition comprising biocide for protecting plywood against the detrimental effect of micro-organisms, wherein the biocide consists of propiconazole. In one embodiment, the aqueous composition comprising biocide is used for protecting plywood against the detrimental effect of fungus. In one embodiment, the aqueous composition comprising biocide is used for protecting plywood against the detrimental effect of brown rot fungi and/or white rot fungi. Coniophora puteana and Gloeophyllum trabeum can be mentioned as examples of brown rot fungi. Coriolus versicolor can be mentioned as an example of white rot fungi.

The inventor surprisingly found out that treating the veneers for protecting plywood against the detrimental effect of micro-organisms according to one or more embodiments as described in this specification results in increased durability during the use thereof in different applications. In one embodiment, the plywood according to one or more embodiments as described in this specification is classified into durability class 3 (moderately durable), or durability class 2 (durable), or durability class 1 (very durable) as determined according to SFS-EN 350-1 (SFS-EN 350-1 - Durability of wood and wood-based products. Natural durability of solid wood. Part 1: Guide to the principles of testing and classification of the natural durability of wood. 1995.) and SFS-EN 350-2 (SFS-EN 350-2 - Durability of wood and wood-based products. Natural durability of solid wood. Part 2: Guide to natural durability and treatability of selected wood species of importance in Europe. 1995.). In one embodiment, the plywood is classified into durability class 3, or durability class 2, or durability class 1 as determined according to SFS-EN 350-1.

In this specification, unless otherwise stated, the expression "plywood" should be understood as a wood based product that comprises a predetermined number of layers of veneer sheets glued together with the grain direction at a predetermined angle to the grain direction of adjacent layers. The expression "veneer" refers to thin slices or layers of wood. The veneer being a layer of wood has two sides and a predetermined thickness.

In step a) of the method a number of veneers are provided.

In one embodiment, at least one veneer is manufactured by one of rotary cutting, flat slicing, quarter slicing, half-round slicing, and rift cutting. These methods are known as such in plywood manufacturing, and different methods result in a slightly different visual appearance of the veneer. Rotary cutting may also be referred to as peeling, rotary peeling, turning or rotary turning. In one embodiment, at least one veneer is manufactured by rotary cutting. In one embodiment, all the veneers are manufactured by rotary cutting. In one embodiment, at least 80 %, and preferably 100 %, of the veneers are manufactured by rotary cutting. Using rotary cutting for manufacturing the at least one veneer, cutting checks or lathe checks are formed in the veneer. Lathe checks create more surface area and routes into the middle part of the veneer, which may result in better and deeper penetration of the biocide into the veneer.

In one embodiment, step a) comprises modifying at least one veneer by heat treatment, chemical treatment, mechanical treatment, or by a combination thereof. When the veneers are modified or pre-treated the dimensional stability, the mechanical properties and/or biological durability thereof can be increased.

In one embodiment, the density of the wood material of the veneer is 300 - 750 kg/m³, or 330 - 650 kg/m³, or 300 - 550 kg/m³, or 450 - 700 kg/m³. The density values are measured in accordance with standards SFS-EN 384 and ISO 3131 (SFS-EN 384 - Structural timber - Determination of characteristic values of mechanical properties and density (2010), and ISO 3131 - Wood - Determination of density for physical and mechanical tests (1975)).

In one embodiment, the veneer is made of softwood. In one embodiment, the veneer is made of hardwood. In one embodiment, the veneer is selected from a group consisting of pine veneer, poplar veneer, beech veneer, aspen veneer, spruce veneer, and birch veneer. In one embodiment, the veneer is hardwood veneer. In one embodiment, the veneer is softwood veneer. In one embodiment, the veneer is spruce veneer or birch veneer. In one embodiment, the veneer is birch veneer. In one embodiment, the veneer is spruce veneer. In one embodiment, the plywood comprises veneers of one or more wood material. In one embodiment, the number of veneers comprises a predetermined number of birch veneers and a predetermined number of spruce veneers. In one embodiment, the number of veneers consists of a predetermined number of birch veneers and a predetermined number of spruce veneers. Such combination of birch veneers and spruce veneers has the added utility that the birch veneers provide strength to the formed plywood whereby the spruce veneers provides the plywood a light-weight structure and biological durability. In one embodiment, the number of veneers comprises a predetermined number of birch veneers or a predetermined number of spruce veneers. In one embodiment, the number of veneers consists of a predetermined number of birch veneers or a predetermined number of spruce veneers.

In one embodiment, the thickness of each of the veneers is 1 - 3.6 mm, or 1.3 - 3.1 mm, or 1.4 - 2.6 mm. Providing a number of veneers having the above thickness has the effect on allowing more or less the whole veneer to be impregnated with the aqueous composition comprising biocide. The inventor surprisingly noticed that in the present method the aqueous composition comprising biocide is able to penetrate the surface of the veneers at a depth of about 1 - 2 mm, such as 1 - 1.5 mm, as calculated from the surface thereof. When both sides of the veneer are applied with the aqueous composition comprising biocide, the whole veneer can be impregnated with the composition thus resulting in efficient protection of the veneer against the detrimental effect of micro-organisms.

The thicknesses of the veneers used for the production of the plywood can be the same for each veneer or can vary from one veneer to another. In one embodiment, the veneers of the plywood have one and the same thickness. In one embodiment, the veneers of the plywood have different thicknesses. In one embodiment, the veneers of the plywood have two or three different thicknesses. In one embodiment, at least 20 % of the veneers of the plywood have a thickness which is at least 0.2 mm, or at least 0.5 mm, less or more than the thickness of the rest of the veneers in the plywood. In one embodiment, all the veneers of the plywood are equally thick, with the precision of 0.2 mm.

The moisture percentage of the different veneers used for producing the plywood can vary. In one embodiment, step a) comprises providing a number of veneers, wherein the average moisture content of the number of veneers is 2 - 6 weight-%, or 2.5 - 4.5 weight-%, or 2.8 - 4.2 weight-%. In one embodiment, step a) comprises providing a number of veneers, wherein the average moisture content of each of the veneers is 1 - 9 weight-%, or 2 - 6 weight-%. The inventor surprisingly noticed that these specific moisture contents allow efficient impregnation of the applied aqueous composition comprising biocide into the wood material of the veneers in a suitable amount while the rest of the applied aqueous composition comprising biocide remains on the surface of the veneer. In one embodiment, step a) of providing a number of veneers comprises drying the veneers. By allowing the veneers to dry the moisture content thereof can be adjusted to a predetermined level.

In one embodiment, the average moisture content of each of the treated veneers in step b) is 1 - 9 weight-%, or 2 - 6 weight-%. In one embodiment, the average moisture content of each of the veneers is increased by 1 - 4 weight-%, or by 1.5 - 3.5 weight-%, or by 1.5 - 2.5 weight-%, or by 2.5 - 3.5 weight-% as a result of the aqueous composition comprising biocide being applied on the veneers.

The moisture values or moisture contents are measured in accordance with standard SFS-EN 322 (Wood-based panels. Determination of moisture content (1993)).

The inventor surprisingly found out that when the treated veneers have the above moisture contents, the following step c) of gluing together the number of veneers with a binder composition to form plywood can be suitably carried out as the moisture content of the veneers allows a suitable penetration of the used binder composition into the wood material of the veneers resulting in efficient gluing as well as allowing the aqueous composition comprising biocide to further penetrate together with the binder composition into the wood material of the veneer. If the moisture content of the treated veneer is unsuitably high, the binder composition may not stay in the glue line to a sufficient extent but may over-flow or over-penetrate into the treated veneers whereby the strength of the plywood may decrease. When part of the binder composition stays in the seam or the glue line and part of the binder composition penetrates into the wooden veneer the part of the veneer next to the glue line, the glue line itself and the plywood may become strengthened. The part of the veneer next to the glue-line becomes a part of the net structure connected to the glue-line.

In step b) of the method the number of veneers is treated by applying an aqueous composition comprising biocide on each of the veneers.

In one embodiment, step b) of applying the aqueous composition comprising biocide is carried out by a surface treatment method. In one embodiment, step b) of applying the aqueous composition comprising biocide is carried out by spraying, soaking, dipping, pouring, rolling, foaming, curtain coating, misting, or by any combination thereof. In one embodiment, step b) of applying the aqueous composition comprising biocide is carried out by spraying. Treating the veneers by spraying has the added utility of ensuring an even distribution of the aqueous composition comprising biocide on the surface of the veneer even in the case that the veneer is not completely smooth or flat but having wavy shape.

In one embodiment, the surface tension of the aqueous composition comprising biocide is at most 40 mN/m, or at most 35 mN/m, or at most 33 mN/m, as determined according to standard ASTM D1331-14 (ASTM D1331-14: Standard Test Methods for Surface and Interfacial Tension of Solutions of Paints, Solvents, Solutions of Surface-Active Agents, and Related Materials. (2014)). Decreasing the surface tension has the effect of enabling the application of small amounts of the aqueous composition comprising biocide evenly on the surface of the veneer.

In one embodiment, the aqueous composition comprises at least one biocide. In one embodiment, the aqueous composition comprises one biocide, or one fungicide. In one embodiment, step b) comprises applying an aqueous composition of biocide, or an aqueous composition of fungicide, or an aqueous composition of propiconazole. In one embodiment, the biocide is a fungicide, and preferably propiconazole. In one embodiment, step b) comprises applying an aqueous composition comprising biocide, wherein the biocide consists of fungicide, or wherein the biocide consists of propiconazole. In one embodiment, step b) comprises applying an aqueous composition comprising biocide, wherein the biocide consists of propiconazole. In one embodiment, step b) comprises applying an aqueous composition comprising biocide, wherein the biocide is fungicide, or wherein the biocide is propiconazole.

Propiconazole, i.e. 1-[[2-(2,4-dichlorophenyl)-4-propyl-1,3-dioxolan-2-yl]methyl]-1,2,4-triazole, is a substance having a CAS-number of 60207-90-1. Contrary to the general expectation in the art, the inventor surprisingly found that propiconazole, being a triazole, has the effect of protecting plywood against the detrimental effect of micro-organisms. Triazoles have generally been recognized as being ineffective in a glueline environment unless they are delivered at unworkable and uneconomically high levels or at high levels that detrimentally compromise the integrity of the glueline.

In one embodiment, the aqueous composition comprising biocide further comprises insectiside, pesticide, fire retardant, water repellent, modification agent, an additional fungicide, or any combination thereof.

In one embodiment, step b) comprises applying the aqueous composition comprising biocide on both sides of each of the veneers. Treating both sides of each of the veneers with the aqueous composition comprising biocide has the added utility of ensuring a suitable retention level also in the inner parts of the veneer.

In one embodiment, the amount of the aqueous composition comprising biocide applied on the veneer varies from 40 to 3 g/m²/side of the veneer, or from 20 - 5 g/m²/side of the veneer, when the concentration of the biocide in the aqueous composition comprising biocide varies from 5 to 30 weight-%. Thus, when the concentration of the biocide in the aqueous composition comprising biocide is higher, a smaller amount of the aqueous composition comprising biocide may be sufficient to be applied on the veneer, and vice versa.

In one embodiment, the concentration of the biocide in the aqueous composition comprising biocide is 5 - 30 weight-%, or 8 - 20 weight-%, or 9 - 11 weight-%.

In one embodiment, the target retention level for the biocide is 900 - 1600 g/m³, or 1100 - 1400 g/m³.In this specification, unless otherwise stated, the expression "target retention level" should be understood as retention of reference preservative deemed to provide an adequate level of protection against biological attack as defined in SFS-EN 1001-2 (Durability of wood and wood based products. Terminology. Part 2: Vocabulary). The unit used, i.e. g/m³, indicates grams of active ingredient per cubic meter of dried wood product.

In one embodiment, the number of veneers treated in step b) is not subjected to a drying process after being treated with the aqueous composition comprising biocide. In one embodiment, the number of veneers treated in step b) is not subjected to a drying process before step c). The inventors surprisingly found out that being able to omit a separate drying step of the treated veneers beneficially affects the strength and the further handling thereof.

In one embodiment, the method further comprises drying the number of veneers after having been treated with the aqueous composition comprising biocide. In one embodiment, the method further comprises drying at least one of the number of veneers after having been treated with the aqueous composition comprising biocide. In one embodiment, the method further comprises a step of drying before and/or after step c).

In one embodiment, step b) is carried out right before step c). In one embodiment, step b) is carried out 1 - 72 hours, or 6 - 72 hours, or 12 - 72 hours before step c) is carried out. In one embodiment, step b) is carried out at least 1 hour, or at least 6 hours, or at least 12 hours, or at least 24 hours, or at least 48 hours, or at least 72 hours, before step c). In one embodiment, step b) is carried out at most 1 hour, or at most 6 hours, or at most 12 hours, or at most 24 hours, or at most 48 hours, or at most 72 hours, before step c).

In step c) of the method the treated veneers are glued together with a binder composition to produce plywood.

In one embodiment, the treated veneers are glued together with a binder composition applied on at least one side of each of the treated veneers. In one embodiment, the treated veneers are glued together with a binder composition applied on both sides of each of the treated veneers. In one embodiment, the treated veneers are glued together with a binder composition applied on both sides of every second veneer. In one embodiment, the treated veneers are glued together with a binder composition applied on a predetermined number of the treated veneers. In one embodiment, the treated veneers are glued together with an aqueous binder composition. In one embodiment, the treated veneers are glued together with a binder composition under the influence of pressing. The use of pressing has the added utility of allowing direction of the binder composition into the veneers. In one embodiment, pressing comprises cold-pressing followed by hot-pressing. Cold-pressing has the effect of directing the binder composition into the veneers already before the curing process is started. Especially, the cold-pressing assists in allowing smaller molecules to penetrate deeper into the veneer whereby the amount of binder composition can be increased.

In one embodiment, the binder composition is a phenolic resin. In one embodiment, the binder composition is an aqueous phenolic resin. In one embodiment, the binder composition is prepared by using at least polymerizable substance and crosslinking agent. In one embodiment, the polymerizable substance comprises phenol, cresol, resorcinol, or any combination thereof. In one embodiment of the present invention the polymerizable substance comprises lignin. In one embodiment, the crosslinking agent is an aldehyde. In one embodiment, the crosslinking agent is formaldehyde. In one embodiment, catalyst and water are used for preparing the binder composition. In one embodiment, the binder composition is a phenol-formaldehyde resin. In one embodiment, binder composition is modified by urea, melamine, lignin, tannin resorcinol, modified phenols, cresols, bisphenols or by any combination thereof.

The method may comprise further steps in addition to step a), step b), and step c).

In one embodiment, the method comprises step d) of coating at least one surface of the plywood facing the exterior with a coating. In one embodiment, the method comprises step d) of coating one side of the plywood facing the exterior with a coating. In one embodiment, the method comprises step d) of coating both sides of the plywood facing the exterior with a coating. In one embodiment, the coating has a smooth surface. In one embodiment, the coating has a textured surface. In one embodiment, the coating comprises a film containing coating agent. In one embodiment, the coating comprises a hydrophobic agent and a film containing coating agent.

In one embodiment, the hydrophobic agent is selected from a group consisting of waxes, oils, alkyl ketene dimer (AKD), silicone, silicone oil, and their combinations. In one embodiment, the hydrophobic agent is paraffin wax, microcrystalline wax, natural wax, and/or slack wax. In one embodiment, the hydrophobic agent is natural oil. In one embodiment, the hydrophobic agent is paraffin wax, microcrystalline wax, or alkyl ketene dimer. Alkyl ketene dimer is a waxy solid material dispersed as small particles in a solution. In one embodiment, the hydrophobic agent is tall oil fatty acid. In one embodiment, the hydrophobic agent is stearine.

In one embodiment, the thickness of the film containing coating agent is 100 - 500 g/m², or 110 - 300 g/m², or 120 - 220 g/m². In one embodiment, the thickness of the film containing coating agent is 100 - 150 g/m² or 200 - 250 g/m².

In one embodiment of the present invention the film containing coating agent comprises a piece of paper having resin impregnated therein. In one embodiment, the resin impregnated in the piece of paper is phenolic resin.

In one embodiment, at least 90 weight-% of the coating agent is phenolic resin. In one embodiment, the coating agent consists of phenolic resin. In one embodiment, the phenolic resin is a phenol-formaldehyde resin. In one embodiment, the phenolic resin is modified by urea, melamine, lignin, resorcinol, modified phenols, cresols, bisphenols or other equivalent compounds.

In one embodiment, the film containing coating agent is attached to the surface of the plywood by using hot-pressing. In one embodiment, the hot-pressing is carried out under pressure of 1.0 - 2.2 MPa, or of 1.2 - 2.0 MPa, or of 1.4 - 1.8 MPa. In one embodiment, the hot-pressing is carried out at a temperature of 120 - 200 °C, or 130 - 190 °C, or 135 - 150 °C.

In one embodiment, the film containing coating agent is attached to the surface of the plywood and the edges of the plywood are sealed with an edge sealing agent. The coating and edge sealing prevent leaching of the biocide that advantageously affects the efficacy of the treatment and the resistance against wood decaying organisms. In one embodiment, the edge sealing agent is water-borne acrylate paint.

The embodiments of the invention described hereinbefore may be used in any combination with each other. Several of the embodiments may be combined together to form a further embodiment of the invention. A method, plywood or a use, to which the invention is related, may comprise at least one of the embodiments of the invention described hereinbefore.

An advantage of the method according to the present invention is that plywood can be protected against the detrimental effect of micro-organisms while other properties needed for its end-use application are efficiently remained.

An advantage of the method according to the present invention is that when the veneers are treated before being glued together to form plywood, the amount of the protecting aqueous composition comprising biocide penetrated into the wood material of the veneers can be ensured to be on a required level.

An advantage of the method according to the present invention is that when each of the veneers used for forming the plywood are treated, the formed plywood is able to resist the detrimental effect of micro-organism, such as fungi, even in the case the plywood is being further processed, such as sawed or screwed, during its use in different applications.

An advantage of the method according to the present invention is that it allows the veneers to be treated without the need of drying the veneers after having been treated with the aqueous composition comprising biocide. This has the added utility of less energy and less dryings checks being needed during the process.

### EXAMPLES

Reference will now be made in detail to the embodiments of the present invention.

The description below discloses some embodiments of the invention in such a detail that a person skilled in the art is able to utilize the invention based on the disclosure. Not all steps of the embodiments are discussed in detail, as many of the steps will be obvious for the person skilled in the art based on this specification.

### EXAMPLE 1 - Treating veneers with an aqueous composition comprising biocide

In this example a number of veneers made of softwood and a number of veneers made of hardwood where provided and then treated with an aqueous composition comprising biocide before being glued together to produce plywood for different end uses.

The target retention level of the aqueous composition comprising biocide was varied.

The aqueous composition comprising biocide was a 10 weight-% propiconazole solution.

Both sides of each of the veneers were sprayed with the aqueous composition comprising biocide. The amount of the used aqueous composition comprising biocide is indicated in Table 1.

The average moisture content of the number of veneers before being treated with the aqueous composition comprising biocide was 3 weight-%.

The change in the moisture content of the veneers as a result of the treatment is indicated in the below table 1.

**Table 1.**

| | Softwood (spruce) | | Hardwood (birch) | |
|---|---|---|---|---|
| Concentration of aqueous composition comprising biocide (weight-%) | 10 | 10 | 10 | 10 |
| Target retention level (g/m³) | 500 | 2000 | 500 | 2000 |
| Thickness of veneer (mm) | 3.2 | 3.2 | 1.5 | 1.5 |
| Amount of aqueous composition applied (g/m²/side of veneer) | 8 | 32 | 4 | 15 |
| Average moisture content of the number of treated veneers (weight-%) | 4.3 | 8.1 | 3.8 | 6.1 |

### EXAMPLE 2 - Treating veneers with an aqueous composition comprising biocide

In this example a number of veneers made of softwood and a number of veneers made of hardwood where provided and then treated with an aqueous composition comprising biocide before being glued together to produce plywood for different end used.

The target retention level of the aqueous composition comprising biocide was kept at 1200 g/m³.

The aqueous composition comprising biocide was a propiconazole solution. The concentration of the aqueous composition comprising biocide was varied.

Both sides of each of the veneers were sprayed with the aqueous composition comprising biocide. The amount of the used aqueous composition comprising biocide is indicated in Table 2.

The average moisture content of the number of veneers before being treated with the aqueous composition comprising biocide was 3 weight-%.

The change in the moisture content of the veneers as a result of the treatment is indicated in the below table 2.

**Table 2.**

| | Softwood (spruce) | | Hardwood (birch) | |
|---|---|---|---|---|
| Concentration of aqueous composition comprising biocide (weight-%) | 5 | 30 | 5 | 30 |
| Target retention level (g/m³) | 1200 | 1200 | 1200 | 1200 |
| Thickness of veneer (mm) | 3.2 | 3.2 | 1.5 | 1.5 |
| Amount of aqueous composition applied (g/m²/side of veneer) | 38 | 6 | 18 | 3 |
| Average moisture content of the number of treated veneers (weight-%) | 9.5 | 3.8 | 6.9 | 3.5 |

### EXAMPLE 3 - Treating veneers with an aqueous composition comprising biocide

In this example a number of veneers made of softwood and a number of veneers made of hardwood where provided and then treated with an aqueous composition comprising biocide before being glued together to produce plywood for different end used.

The target retention level of the aqueous composition comprising biocide was kept at 1200 g/m³.

The aqueous composition comprising biocide was a 10 weight-% propiconazole solution.

Both sides of each of the veneers were sprayed with the aqueous composition comprising biocide. The amount of the used aqueous composition comprising biocide is indicated in Table 3.

The treatment with the aqueous composition comprising biocide was tested for veneers of different moisture content and density.

The change in the moisture content of the veneers as a result of the treatment is indicated in the below table 3.

**Table 3.**

| | Average softwood (spruce) | Light-weight softwood (spruce) | Light-weight and moist softwood (spruce) | Heavyweight and dry softwood (spruce) |
|---|---|---|---|---|
| Average moisture content of the number of veneers before treatment (%) | 3 | 3 | 6 | 0 |
| Density of wood material (kg/m³) | 352 | 317 | 317 | 387 |
| Thickness of veneer (mm) | 3.2 | 3.2 | 3.2 | 3.2 |
| Amount of aqueous composition applied (g/m²/side of veneer) | 19 | 19 | 19 | 19 |
| Average moisture content of the number of treated veneers (weight-%) | 6.1 | 6.4 | 9.4 | 2.8 |

| | Average hardwood (birch) | Light-weight hardwood (birch) | Light-weight and moist hardwood (birch) | Heavyweight and dry hardwood (birch) |
|---|---|---|---|---|
| Average moisture content of the number of veneers before treatment (%) | 3 | 3 | 6 | 0 |
| Density of wood material (kg/m³) | 580 | 520 | 520 | 650 |
| Thickness of veneer (mm) | 1.5 | 1.5 | 1.5 | 1.5 |
| Amount of aqueous composition applied (g/m²/side of veneer) | 9 | 9 | 9 | 9 |
| Average moisture content of the number of treated veneers (weight-%) | 4.9 | 5.1 | 8.1 | 1.7 |

### Example 4 - Determining the efficiency of an aqueous composition comprising biocide

The efficacy of applying an aqueous composition comprising biocide against the detrimental effect of fungi on plywood was tested. In this example 1.5 mm rotary-peeled birch (Betula pendula) and spruce (Picea abies) veneers were used. The average moisture content of the number of birch and spruce veneers before being treated with the aqueous composition comprising biocide was 3.9 weight-% and 4.3 weight-%, respectively. A propiconazole solution was used as the aqueous composition comprising biocide.

The following two different treatment methods were compared: 1) glue-line impregnation; and 2) veneer impregnation by spraying.

The glue-line impregnation was carried out in the following manner:
Predetermined amounts of propiconazole solution were mixed with a binder composition that is used for gluing together the veneers. Phenol-formaldehyde resin was used as the binder composition. The predetermined amounts of the propiconazole solution were mixed with the phenol formaldehyde resin such that the following three different target retention levels were achieved: 0, 900 and 1200 g/m³.

11-ply mixed plywood was manufactured by gluing together the veneers with the above formed composition using a glue spreading rate of 160 g/m². The assembled panels were first cold pressed for 8 minutes at 0.6 MPa and then hot-pressed for 9 minutes at 130 °C with a maximum pressure of 1.4 MPa.

The veneer impregnation by spraying was carried out in the following manner:
Predetermined amounts of propiconazole solution were sprayed on both sides of the veneers such that the following three different target retention levels were achieved: 0, 900 and 1200 g/m³.The average moisture content of treated birch and spruce veneers was at most 10 weight-%.

11-ply mixed plywood was manufactured by gluing together the veneers with the same type of binder composition as above used for the glue-line impregnation treatment however in this test the binder composition lacked the propiconazole solution. I.e. a phenol-formaldehyde resin was used using a glue spreading rate of 160 g/m². The assembled panels were first cold pressed for 8 minutes at 0.6 MPa and then hot-pressed for 9 minutes at 130 °C with maximum pressure of 1.4 MPa.

The bond quality of the plywood prepared as above decsribed was measured and it was determined whether the fungicide addition had interfered with the bonding process. The measurement was done according to standard EN 314-1 (SFS-EN 314-1. Plywood. Bonding quality. Part 1: Test methods. (2005), SFS-EN 314-2. Plywood. Bonding quality. Part 2: Requirements. (1993) after soaking and boiling pre-treatments. The results are presented in table 4 below.

**Table 4.**

| Treatment | Target retention (g/m3) | Soaking Shear (N/mm2 ) | strength | Boiling Shear (N/mm2) | strength |
|---|---|---|---|---|---|
| | | x | s | x | s |
| Glue-line impregnation | 0 | 2,11 | 0,35 | 1,81 | 0,30 |
| | 900 | 1, 93 | 0,47 | 1, 63 | 0,42 |
| | 1200 | 2,10 | 0,46 | 1,79 | 0,35 |
| Veneer impregnation by spraying | 0 | 1,83 | 0,51 | 1,71 | 0,49 |
| | 900 | 2,23 | 0,46 | 2, 02 | 0,41 |
| | 1200 | 1,87 | 0,47 | 1,70 | 0,33 |

From the results it can be seen that the bonding met the requirements of standard EN 314-2 (class 1 and class 3) for both treatment types.

The produced plywoods were also tested for their ability to withstand the detrimental effect of fungi. The effectiveness of the plywood treated with the above described two different treatments (i.e. glue-line impregnation and veneer impregnation by spraying) against wood destroying basidiomycetes was determined according to standard ENV 12038 laboratory test (ENV 12038. Durability of wood and wood-based products - Wood based panels - Method of test for determining the resistance against wood-destroying basidiomycetes. (2002)) after leaching procedure according to standard EN 84 (EN 84. Wood preservatives - Accelerated ageing of treated wood prior to biological testing - Leaching. (1997)). The decay resistance was assessed against the white rot fungi Coriolus versicolor and brown rot fungi Coniophora puteana and Gloeophyllum trabeum. The mean mass losses, calculated based on dry weight before and after testing, are presented in table 5 below.

The durability class of the treated plywood against wood destroying fungi was evaluated according to SFS-EN 350-1 (SFS-EN 350-1 - Durability of wood and wood-based products. Natural durability of solid wood. Part 1: Guide to the principles of testing and classification of the natural durability of wood. 1995.) and SFS-EN 350-2 (SFS-EN 350-2 - Durability of wood and wood-based products. Natural durability of solid wood. Part 2: Guide to natural durability and treatability of selected wood species of importance in Europe. 1995. ) .

**Table 5.**

| Treatment | Target retention (g/m3) | Mass loss (%) | | | Calculated durability class acc. SFS-EN 350-1 and SFS-EN 350-2 |
|---|---|---|---|---|---|
| | | Coniophora puteana | Gloeophyllum trabeum | Coriolus versicolor | |
| Glueline impregnation | 0 | 35,5 | 29,5 | 35,8 | 5 |
| | 900 | 32,9 | 27,8 | 35,7 | 5 |
| | 1200 | 30,9 | 26,7 | 33,8 | 5 |
| Veneer impregnation by spraying | 0 | 46,0 | 30,7 | 39,1 | 5 |
| | 900 | 0,2 | 0,2 | 1,6 | 1 |
| | 1200 | 0,2 | 0,1 | 0,3 | 1 |

The product is considered to be fully resistant against attack of wood destroying Basidiomycetes when the mean mass loss of all individual samples is less than 3 %. The results show that there is a clear difference between the above two treatment methods.

The glue-line impregnation treatment only slightly increases the decay resistance, whereas with the veneer spraying treatment full protection against all three fungi was achieved with both retention levels. In the glue-line impregnation method most of the propiconazole is trapped into the glue line, whereby the level of protecting against the tested fungi is not high enough.

As a result of the veneer spraying treatment, the calculated durability class was increased from 5 (not durable) to 1 (very durable) with all tested fungi.

### Example 5 - Determining effect on gluing quality

Pilot scale veneer spraying and gluing tests were performed to determine whether the above presented treatment has an effect on the plywood gluing quality.

1300 x 1300 x 1.5 mm rotary-peeled birch and spruce veneers were grouped into three classes. The first class was treated 3 days before being glued together with a resin, the second class was treated 2 hours before being glued together with a resin, and the third class was remained untreated.

Veneer impregnation by spraying was performed as above described for example 4 on both sides of the veneers with a 10 weight-% propiconazole solution. The spreading rate was 8 g/m² per side of the veneer. The target retention level was kept at 1200 g/m³.

8-ply mixed plywood was manufactured with a construction of 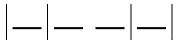 wherein
| is birch veneer; and
- is spruce veneer.

A phenol-formaldehyde resin was used for gluing together the veneers. The glue spreading rate was about 160 g/m². The panels were first cold pressed for 8 minutes at 0.6 MPa and then hot-pressed for 11 minutes at 130 °C with maximum pressure of 1.2 MPa.

The time used for the treatment had no effect on the gluing process. All the three veneer classes behaved similarly in the process.

The bond quality of the plywood was measured and it was determined whether the propiconazole addition had interfered with the bonding process. The measurement was carried out according to EN 314-1 after soaking and boiling pre-treatments. The results are presented in the table 6 below.

**Table 6.**

| Treatment | Shear (N/mm2) - Surface | | strength Soaking Middle | | Shear (N/mm2) - Surface | | strength Boiling Middle | |
|---|---|---|---|---|---|---|---|---|
| | x | s | x | s | x | s | x | s |
| Untreated | 1,80 | 0,32 | 1,49 | 0,18 | 1,60 | 0,16 | 1,33 | 0,10 |
| 2 hours before gluing | 1,91 | 0,26 | 1,60 | 0,14 | 1,68 | 0,15 | 1,32 | 0,10 |
| 3 days before gluing | 1,85 | 0,16 | 1,49 | 0,14 | 1,61 | 0,14 | 1,29 | 0,19 |

The bonding met the requirements of standard EN 314-2 (class 1 and class 3). The propiconazole spraying had no effect on the glue-line shear strength.

The bending strength and modulus of elasticity were determined according to standard SFS-EN 310 (SFS-EN 310. Wood-based panels. Determination of modulus of elasticity in bending and of bending strength. (1993)). The results are presented in table 7 below.

**Table 7**

| Treatment | 3-point bending strength (N/mm2) | | | | Modulus of elasticity (N/mm2) | | | |
|---|---|---|---|---|---|---|---|---|
| | Parallel | | Perpendicular | | Parallel | | Perpendicular | |
| | x | s | x | s | x | s | x | s |
| Untreated | 61,4 0 | 2,89 | 39, 0 5 | 4,04 | 6796 | 371 | 4180 | 222 |
| 2 hours before gluing | 64, 4 2 | 1, 97 | 43, 6 9 | 4,51 | 7744 | 217 | 4407 | 567 |
| 3 days before gluing | 65, 8 0 | 2,55 | 36, 4 0 | 5,25 | 7936 | 254 | 3820 | 567 |

The results showed that there is no appreciable difference in the strength of the treated plywood in either orientation compared to that of the untreated control. This indicated that propiconazole treatment does not lead to any decrease in the strength of the plywood.

### Example 6 - Coating of propiconazole treated plywood

Mixed 8-ply plywood panels were manufactured in mill scale. Both surfaces of 1.5 mm rotary-peeled birch and spruce veneers were sprayed with 10 weight-% propiconazole solution. The spreading rate was 9 g/m² per side of veneer. The target retention level was 1200 g/m³.The average moisture contents of the number of birch and spruce veneers before being treated with the propiconazole solution were 2.9 weight-% and 3.2 weight-%, respectively. These were increased to 4.8 weight-% and 6.3 weight-%, respectively, as a result of the propiconazole treatment.

8-ply mixed plywood was manufactured with a construction of 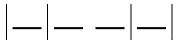 wherein
| is a birch veneer; and
- is a spruce veneer.

A phenol-formaldehyde resin was used for gluing together the veneers. The glue spreading rate was about 160 g/m². The panels were first cold pressed for 8 minutes at 0.6 MPa and then hot-pressed for 11 minutes at 130 °C with maximum pressure of 1.2 MPa. The open time between assembling and cold press was 15 minutes.

After hot-pressing, the plywood surfaces were sanded with a double belt sanding machine. Sanding belt roughness was P60 (in accordance with standard ISO 6344) for one belt and P80 for the other belt. Thereafter a film containing coating agent, in this example a film containing phenolic resin, was applied on both of the surfaces. The weights of the films were 167 g/m² on the top surface and 145 g/m² on the bottom surface. Both surfaces were patterned. The top surface was patterned with hexa pattern and the bottom surface was patterned with wire pattern. The film was applied at a temperature of 135 °C under a pressure of 1.4 MPa for 6 minutes. The coated panels were sawed into predetermined sizes and finally the edges of the panels were sealed.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for protecting plywood comprising a number of veneers against the detrimental effect of micro-organisms, **characterized in that** the method comprises:
a) providing a number of veneers, wherein each of the veneers has two sides and a thickness of 0.5 - 4.0 mm;
b) treating the number of veneers by applying an aqueous composition comprising biocide on at least one side of each of the veneers, wherein the amount and concentration of the aqueous composition comprising biocide, applied on the veneer, is chosen such that the average moisture content of the treated veneer is at most 10 weight-% when the target retention level for the biocide is 500 - 2000 g/m³; and
c) gluing together the treated veneers with a binder composition to produce plywood.

2. The method of claim 1, wherein the biocide is fungicide, and preferably propiconazole.

3. The method of claim 1, wherein step b) comprises applying an aqueous composition comprising biocide, wherein the biocide consists of fungicide, or wherein the biocide consists of propiconazole.

4. The method of any one of claims 1 - 3, wherein step b) of applying the aqueous composition comprising biocide is carried out by spraying, soaking, dipping, pouring, rolling, foaming, curtain coating, misting, or by any combination thereof.

5. The method of any one of claims 1 - 4, wherein step b) comprises applying the aqueous composition comprising biocide on both sides of each of the veneers.

6. The method of any one of claims 1 - 5, wherein the thickness of each of the veneers is 1 - 3.6 mm, or 1.3 - 3.1 mm, or 1.4 - 2.6 mm.

7. The method of any one of claims 1 - 6, wherein the amount of the aqueous composition comprising biocide applied on the veneer varies from 40 to 3 g/m²/side of the veneer, or from 20 - 5 g/m²/side of the veneer, when the concentration of the biocide in the aqueous composition comprising biocide varies from 5 to 30 weight-%.

8. The method of any one of claims 1 - 7, wherein the concentration of the biocide in the aqueous composition comprising biocide is 5 - 30 weight-%, or 8 - 20 weight-%, or 9 - 11 weight-%.

9. The method of any one of claims 1 - 8, wherein step a) comprises providing a number of veneers, wherein the average moisture content of the number of veneers is 2 - 6 weight-%, or 2.5 - 4.5 weight-%, or 2.8 - 4.2 weight-%.

10. The method of any one of claims 1 - 9, wherein step a) comprises providing a number of veneers, wherein the average moisture content of each of the veneers is 1 - 9 weight-%, or 2 - 6 weight-%.

11. The method of any one of claims 1 - 10, wherein the average moisture content of each of the treated veneers in step b) is 1 - 9 weight-%, or 2 - 6 weight-%.

12. The method of any one of claims 1 - 11, wherein the average moisture content of each of the veneers, is increased by 1 - 4 weight-%, or by 1.5 - 3.5 weight-%, or by 1.5 - 2.5 weight-%, or by 2.5 - 3.5 weight-% as a result of the aqueous composition comprising biocide being applied on the veneers.

13. The method of any one of claims 1 - 12, wherein the target retention level for the biocide is 900 - 1600 g/m³, or 1100 - 1400 g/m³.

14. The method of any one of claims 1 - 13, wherein the density of the wood material of the veneer is 300 - 750 kg/m³, or 330 - 650 kg/m³, or 300 - 550 kg/m³, or 450 - 700 kg/m³.

15. The method of any one of claims 1 - 14, wherein the veneer is selected from a group consisting of pine veneer, poplar veneer, beech veneer, aspen veneer, spruce veneer, and birch veneer.

16. Plywood obtainable by the method as defined in any one of claims 1 - 15.

17. Plywood comprising a number of veneers glued together with a binder composition and being protected against the detrimental effect of micro-organisms, **characterized in that** each of the veneers has two sides and a thickness of 0.5 - 4.0 mm, wherein each of the veneers are applied, on at least one side thereof, with an aqueous composition comprising biocide, wherein the biocide consists of propiconazole, and wherein the target retention level of the biocide is 500 - 2000 g/m³.

18. The plywood of any one of claims 16 - 17, wherein the plywood is classified into durability class 3, or durability class 2, or durability class 1 as determined according to SFS-EN 350-1.

19. Use of the plywood of any one of claims 16 - 17 for the production of scaffold, or vehicle flooring.

20. Use of an aqueous composition comprising biocide for protecting plywood against the detrimental effect of micro-organisms, wherein the biocide consists of propiconazole.
